# EUROPÄISCHE PATENTSCHRIFT

(11) **EP 2 993 082 B1**
(45) Veröffentlichungstag und Bekanntmachung des Hinweises auf die Patenterteilung: **30.10.2019**
(21) Anmeldenummer: 15183737.4
(22) Anmeldetag: 03.09.2015
(51) Int. Cl.: B60P 7/08

(54) **VERFAHREN ZUM SPANNEN EINES SCHWEISS-SATTELSTÜCKS GEGEN EIN KUNSSTOFFROHR**
METHOD FOR CLAMPING A WELDING SADDLE PIECE AGAINST A PLASTIC PIPE
PROCEDE POUR SERRER UNE PARTIE D'ETRIER DE SOUDURE CONTRE UN TUYAU EN PLASTIQUE

(30) Priorität: 08.09.2014 DE 102014013342
(43) Veröffentlichungstag der Anmeldung: 09.03.2016
(73) Patentinhaber: PF Schweisstechnologie GmbH, 36304 Alsfeld (DE)
(72) Erfinder: Spychalski-Merle, Achim, 36304 Alsfeld (DE)
(74) Vertreter: Eisenführ Speiser

(56) Entgegenhaltungen:
- DE-U1-202010 000 251
- US-A- 3 290 010
- US-A- 3 826 473
- US-A1- 2003 177 581
- US-A1- 2011 150 595

## Beschreibung

Die Erfindung betrifft ein Verfahren zum Spannen eines Schweiß-Sattelstücks gegen ein Kunststoffrohr. Ein herkömmliches Spannsystem, das in Nutzfahrzeugen verwendet wird ist in US 3290010 A offenbart.

Um bei unter Umständen bereits verlegten Kunststoffrohrleitungen, beispielsweise zum Übertragen von Wasser, Gas, Öl oder dergleichen, zusätzliche Verzweigungen oder Aus- beziehungsweise Einlässe vorzusehen, ist es üblich, sogenannte Schweiß-Sattelstücke, auch Schweißsattel oder Sattelstücke genannt, mittels Kunststoffschweißen an einer Umfangsfläche des Kunststoffrohres anzubringen. Diese Schweiß-Sattelstücke weisen meist einen Rohrstutzen auf, in dem beispielsweise ein Ventil oder dergleichen vorgesehen ist sowie einen gekrümmten Flanschkragen, der an die äußere Krümmung des Kunststoffrohres angepasst ist, sodass ein flächiger Kontakt zwischen Flanschkragen und Kunststoffrohr herstellbar ist. Nachdem die Kontaktstelle an dem Kunststoffrohr beispielsweise mittels Abschälen gereinigt worden ist, wird das Schweiß-Sattelstück auf dieser Stelle aufgesetzt und fixiert. Dabei ist es erforderlich, das Schweiß-Sattelstück mit einem bestimmten Anpressdruck gegen die Rohrmantelfläche zu pressen. Dazu hat es sich im Stand der Technik bewährt, Zugratschen und Zurrgurte, wie sie häufig auch in der Logistik Einsatz finden, und beispielsweise von der Fa. SpanSet Ltd., Cheshire, Großbritannien, bezogen werden können, zu verwenden. Dabei werden die Spanngurte in der Regel axial voneinander beabstandet jeweils benachbart zu dem Rohrstutzen des Schweiß-Sattelstücks umfänglich um das Kunststoffrohr so angeordnet, dass die Gurte auf einer nach außen gerichteten Oberfläche des Flanschkragens des Schweiß-Sattelstücks aufliegen und das Schweiß-Sattelstück so gegen das Rohr pressen. Vorteilhaft an diesen Spanngurten, die in der Regel Textilgurte aufweisen, ist gegenüber Spannketten insbesondere, dass das Rohr nicht beschädigt wird. Die Gurte werden dann manuell mittels an den Zugratschen werksseitig vorgesehenen Spannhebeln gespannt. Als praktikabel hat sich dabei erwiesen, zusätzlich ein sogenanntes TFI -Tension Force Indicator, ebenfalls erhältlich über die Fa. SpanSet, zu verwenden. Dieses Element wird an der Zugratsche in dem Verbindungspunkt zwischen Gurt und einem Rahmen der Zugratsche derart angeordnet, dass es beim Spannen des Gurtes belastet wird. Durch eine Skala wird dann die entsprechende Zugkraft, die auf den Gurt wirkt, angezeigt. Die Zugkraft an dem Gurt ist ein Indikator für die Anpresskraft des Schweiß-Sattelstücks gegen das Rohr.

Nachteilig hieran ist allerdings, dass aufgrund der Krümmung des Rohres eine Kraftanzeige des TFI nicht immer zuverlässig funktioniert. Zudem kann es beim Spannen des Gurtes mittels der manuell betätigten Zugratsche dazu kommen, dass das TFI verrutscht und nur noch schwer oder gar nicht ablesbar ist. Ein weiteres Problem liegt darin begründet, dass gerade bei großen Kunststoffrohren sehr hohe Spannkräfte von 10 kN oder mehr erforderlich sind und diese bei manuell betätigbaren Zugratschen mit den werksseitig vorgesehenen Spannhebeln nur schwer realisierbar sind. Schließlich sind aktuell auf dem Markt keine TFI erhältlich, die Spannkräfte von 10 kN oder mehr anzeigen können.

Es ist daher eine Aufgabe der vorliegenden Erfindung, die vorgenannten Probleme wenigstens teilweise zu beheben.

Die Aufgabe wird durch die Merkmale des Anspruchs 1 gelöst.

In einem ersten Beispiel wird eine Werkzeugkupplung für ein Spannsystem zum Spannen eines Schweiß-Sattelstücks gegen ein Kunststoffrohr mit einem Körper offenbart, der eine Antriebsseite und eine gegenüberliegende Abtriebsseite hat, wobei an der Antriebsseite erste Formschlussmittel ausgebildet sind und an der Abtriebsseite zweite Formschlussmittel ausgebildet sind, wobei die ersten Formschlussmittel dazu angepasst sind, mit einem Drehmomentschlüssel zum Antreiben des Körpers zusammenzuwirken, und die zweiten Formschlussmittel dazu angepasst sind, mit einer geschlitzten Gurtwelle einer Zugratsche eines Spannsystems zum Übertragen von Momenten formschlüssig zusammenzuwirken. Die ersten Formschlussmittel sind vorzugsweise dazu angepasst, reversibel mit einem Drehmomentschlüssel zum Antreiben des Körpers zusammenzuwirken. Die Werkzeugkupplung ist vorzugsweise mit herkömmlichen Zugratschen, die eine geschlitzte Gurtwelle zum Aufwickeln eines Spanngurts aufweisen, verwendbar. Die Werkzeugkupplung ist vorzugsweise auf ein Wellenende der Gurtwelle anordenbar, insbesondere aufsteckbar, vorzugsweise reversibel befestigbar. Dadurch ist es möglich, einen Drehmomentschlüssel, wie etwa eine Drehmomentratsche, zum Übertragen von Momenten mit der Gurtwelle der Zugratsche zu koppeln und diese so anzutreiben. Gurtwellen von Zugratschen sind gattungsgemäß geschlitzt und weisen wenigstens einen sich axial vollständig durch die Welle hindurch erstreckenden Schlitz auf, der dazu dient, einen Gurt aufzunehmen. Ein Ende des Gurtes ist in der Regel fest mit einem Gehäuse oder Rahmen einer Zugratsche verbunden, das andere Ende ist frei. Beim Anlegen des Spannsystems wird dann das freie Ende des Spanngurtes beispielsweise um das Rohr und das Schweiß-Sattelstück herumgeführt und durch den Schlitz oder Spalt in der Gurtwelle geschoben. Dadurch kann die Schlaufenlänge des Spanngurts bereits auf einfache Weise auf eine passende Größe reduziert werden. Durch Drehen der Gurtwelle wird dann die Schlaufe weiter verkleinert und ein Abschnitt des Gurtes auf der Gurtwelle aufgewickelt, wodurch der Gurt gleichzeitig an der Gurtwelle fixiert
wird, sodass ein Zurückrutschen des Gurtes verhindert wird. Es ist bevorzugt, diesen Schlitz der Gurtwelle, der gattungsgemäß und werksseitig bei Zugratschen, die erfindungsgemäß verwendet werden können, vorgesehen ist, zur Kopplung mit den zweiten Formschlussmitteln der Werkzeugkupplung zu nutzen.

Durch die Erfindung ist es möglich, eine vorbestimmte Anpresskraft, die einem vorbestimmten Moment zum Anziehen der Gurtwelle entspricht, mittels eines Drehmomentschlüssels auf das Schweiß-Sattelstück aufzubringen. Dazu ist lediglich das erforderliche Moment an dem Drehmomentschlüssel einzustellen und dieser bspw. manuell zu betätigen, bis das gewünschte Moment erreicht ist, was bei üblichen Drehmomentschlüsseln durch eine taktile Rückmeldung angezeigt wird. Darüber hinaus ist auch der Spannvorgang an sich vereinfacht. Bei separaten Drehmomentschlüsseln können längere Hebel vorgesehen werden, als dies bei den werksseitig an den Zugratschen vorgesehenen kurzen Spannhebeln möglich ist, wodurch eine durch einen Bediener aufzubringende manuelle Kraft verringert ist. Ferner ist es nicht erforderlich, für jede denkbare Spannkraft ein separates TFI vorzuhalten, sondern vielmehr ist es möglich, mit einem Drehmomentschlüssel einen großen Bereich an Drehmomenten und somit aufzubringenden Spannkräften abzudecken. Dadurch ist es zudem möglich, Lager- und Materialkosten einzusparen. Eine weitere Material- und Lagerkostenersparnis ergibt sich dadurch, dass bei den erfindungsgemäß verwendbaren Zugratschen keine werksseitig vorgesehenen und fest mit diesen verbundenen Spannhebel erforderlich sind. Dadurch verringern sich sowohl das Gewicht einer erfindungsgemäß verwendbaren Zugratsche, als auch deren Abmessungen, wodurch auch Lagerkosten reduziert werden können.

Gemäß einer ersten bevorzugten Ausführungsform weisen die ersten Formschlussmittel eine erste Zentralachse und die zweiten Formschlussmittel eine zweite Zentralachse auf, und die Zentralachsen sind koaxial ausgerichtet. Dadurch ist ein Antreiben der geschlitzten Gurtwelle mittels des Drehmomentschlüssels besonders einfach möglich. Vorzugsweise sind die Zentralachsen koaxial mit einer Rotationsachse der Gurtwelle im montierten Zustand ausgerichtet.

Weiterhin ist bevorzugt, dass die ersten Formschlussmittel einen Außensechskant aufweisen. Zusätzlich oder alternativ weisen die ersten Formschlussmittel einen Innensechskant auf. Sowohl Außen- als auch Innensechskant sind verbreitete Formschlussmittel, die zu einer Vielzahl an mit herkömmlichem Drehmomentschlüssel verwendbaren Werkzeugen korrespondieren. Dadurch ist es möglich, einen herkömmlichen Drehmomentschlüssel mit herkömmlichen Werkzeugen zu verwenden, um mittels der Werkzeugkupplung eine Gurtwelle einer Zugratsche anzutreiben. Bevorzugt weisen die ersten Formschlussmittel sowohl einen Außen- als auch einen Innensechskant auf, wodurch die Flexibilität der Werkzeugkupplung weiter erhöht ist. Zur Übertragung der hohen Spannkräfte sind Innen- und Außensechskant vorzugsweise ausreichend dimensioniert, beispielsweise ist ein Außensechskant mit einem Schlüsselmaß in einem Bereich von 15 bis 26mm, vorzugsweise von 19 mm vorgesehen. Weiterhin zusätzlich oder alternativ sind die ersten Formschlussmittel korrespondierend zu einer Werkzeugaufnahme eines Drehmomentschlüssels ausgebildet. Vorzugsweise sind die ersten Formschlussmittel dazu als Vierkant mit einer Weite im Bereich von 1 bis 1,5 Zoll (2,54 cm bis 3,81 cm) ausgebildet. Dadurch kann die Werkzeugkupplung unmittelbar ohne separates Werkzeug mit dem Drehmomentschlüssel zusammenwirken.

Gemäß einer weiteren bevorzugten Ausführungsform weisen die zweiten Formschlussmittel einen Steg zum Eingreifen in einen Schlitz einer geschlitzten Gurtwelle einer Zugratsche eines Spannsystems auf. Dies ist eine besonders einfache Möglichkeit, eine formschlüssige Kopplung zwischen der Werkzeugkupplung und der geschlitzten Gurtwelle herzustellen, um so Momente von der Antriebsseite der Werkzeugkupplung über die Abtriebsseite der Werkzeugkupplung auf die Gurtwelle zu übertragen und so den Gurt zu spannen. Der Steg ist beispielsweise als Vorsprung an der Abtriebsseite des Körpers der Werkzeugkupplung vorgesehen.

Ferner ist bevorzugt, dass der Steg eine diesen definierende Zentralebene aufweist, und eine Zentralachse der zweiten Formschlussmittel im Wesentlichen in der Zentralebene liegt. Dadurch ist die Übertragung von Momenten von einem Drehmomentschlüssel über die Antriebsseite und die Abtriebsseite der Werkzeugkupplung auf eine Gurtwelle einer Zugratsche eines Spannsystems weiterhin vereinfacht. Die Zentralachse der zweiten Formschlussmittel liegt vorzugsweise innerhalb des Stegs beziehungsweise der Zentralebene, die den Steg definiert. Der Steg hat vorzugsweise eine im Wesentlichen ebene, plattenförmige Konfiguration und die Zentralebene liegt innerhalb des Stegs.

In einer bevorzugten Ausgestaltung der Werkzeugkupplung weisen die zweiten Formschlussmittel zwei Ausnehmungen zur Aufnahme von zwei axialen Endabschnitten einer geschlitzten Gurtwelle einer Zugratsche eines Spannsystems auf. Die Ausnehmungen sind vorzugsweise so ausgebildet, dass die Werkzeugkupplung mit leichtem Spiel auf den Endabschnitt der Gurtwelle anordenbar beziehungsweise aufsteckbar ist. Dabei ist weiterhin bevorzugt, dass der Steg die beiden Ausnehmungen voneinander trennt. So wird eine besonders günstige Bauform der Werkzeugkupplung geschaffen. Während der Steg in den Schlitz der Gurtwelle eingreift, befinden sich die zwei Endabschnitte innerhalb der Ausnehmungen, sodass durch die beiden Ausnehmungen, die in die axialen Endabschnitte aufgenommen sind, eine Steckverbindung erzeugt wird, wodurch die Werkzeugkupplung selbsthaltend auf der Gurtwelle reversibel anordenbar ist.

Gemäß einer weiteren bevorzugten Ausführungsform weist die Werkzeugkupplung eine Bohrung auf, die sich wenigstens teilweise radial durch den Körper erstreckt, vorzugsweise im Bereich der zweiten Formschlussmittel, zur Aufnahme eines Arretierstifts zum Arretieren der Werkzeugkupplung gegen eine geschlitzte Gurtwelle einer Zugratsche eines Spannsystems. In der Regel weisen herkömmliche Zugratschen bereits gattungsgemäß einen Arretierstift auf, der durch eine Durchgangsbohrung in der Gurtwelle geführt ist, um ein axiales Herausfallen der Gurtwelle aus einem Rahmen oder Gehäuse der Zugratsche zu verhindern. Daher ist vorzugsweise vorgesehen, dass auch die Werkzeugkupplung eine derartige Bohrung, insbesondere Durchgangsbohrung, aufweist, sodass der Arretierstift durch die Durchgangsbohrung der Werkzeugkupplung sowie die Bohrung der Gurtwelle gleichermaßen hindurchführbar ist, um diese gegeneinander zu arretieren. Dadurch ist ein Lösen der Werkzeugkupplung von der geschlitzten Gurtwelle beim Antreiben dieser mittels des Drehmomentschlüssels verhindert, wodurch die Handhabung eines Spannsystems vereinfacht ist.

Weiterhin ist bevorzugt, dass die Werkzeugkupplung einstückig ausgebildet ist. Vorzugsweise ist die Werkzeugkupplung aus einem Metallmaterial einstückig geformt. Beispielsweise ist die Werkzeugkupplung mittels spanender Bearbeitung aus einem Vollmaterial gefertigt, oder mittels eines Urformverfahrens als Halbzeug hergestellt und anschließend spanend fertig bearbeitet. Dadurch ist die Werkzeugkupplung insgesamt robust und zudem kostengünstig herzustellen.

In einem zweiten Beispiel wird ein Spannsystem zum Spannen eines Schweiß-Sattelstücks gegen ein Kunststoffrohr offenbart, wobei das Spannsystem eine Werkzeugkupplung nach einer der vorstehend beschriebenen bevorzugten Ausführungsformen einer Werkzeugkupplung sowie eine Zugratsche aufweist, wobei die Zugratsche einen Rahmen, eine drehbar in dem Rahmen gelagerte und geschlitzte Gurtwelle mit einem axialen Schlitz und einem Gurt aufweist, der an einem ersten Ende mit dem Rahmen verbindbar oder verbunden ist und dessen anderes Ende durch den Schlitz der Gurtwelle führbar ist, sodass der Gurt durch Rotation der Gurtwelle auf diese aufwickelbar ist, um eine Schlaufe des Gurtes zu verkleinern, wobei die Zugratsche einen Rastmechanismus aufweist, der Rotation der Gurtwelle in eine Drehrichtung gestattet und in die andere verhindert, wobei sich wenigstens ein geschlitztes Wellenende der Gurtwelle aus dem Rahmen heraus erstreckt und die Werkzeugkupplung mittels der zweiten Formschlussmittel auf dem geschlitzten Wellenende lösbar angeordnet ist. Für die bevorzugten Ausgestaltungen der Werkzeugkupplung und die entsprechenden Vorteile wird auf die obige Beschreibung zu dem ersten Beispiel vollumfänglich verwiesen. Insbesondere im Zusammenhang mit einer Zugratsche, die entsprechend der Zugratsche gemäß dem zweiten Beispiel ausgebildet ist, ergeben sich die oben beschriebenen Vorteile der Werkzeugkupplung, und die Effekte der Erfindung können auf vorteilhafte Weise genutzt werden.

In einer bevorzugten Ausführungsform des Spannsystems weist die Werkzeugkupplung eine Bohrung auf, die sich wenigstens teilweise radial durch den Körper erstreckt, vorzugsweise im Bereich der zweiten Formschlussmittel, zur Aufnahme eines Arretierstifts zum Arretieren der Werkzeugkupplung gegen eine Gurtwelle einer Zugratsche eines Spannsystems, und die Zugratsche des Spannsystems weist einen Arretierstift auf, der radial durch die Bohrung der Werkzeugkupplung und eine Bohrung in dem geschlitzten Wellenende der Gurtwelle verläuft, sodass die Werkzeugkupplung mittels des Arretierstifts auf der Gurtwelle arretiert ist. Hierdurch wird eine Kopplung der Werkzeugkupplung mit der Gurtwelle erreicht, die reversibel lösbar ist, sodass die Werkzeugkupplung nach Abschluss eines Spannvorgangs entfernt und zum Spannen weiterer Gurte verwendet werden kann.

In einer besonders bevorzugten Ausgestaltung des Spannsystems weist dieses ferner einen Drehmomentschlüssel auf, wobei die ersten Formschlussmittel der Werkzeugkupplung mit dem Drehmomentschlüssel zusammenwirken. Dazu kann der Drehmomentschlüssel beispielsweise ein Werkzeug aufweisen, und die ersten Formschlussmittel der Werkzeugkupplung wirken mit dem Werkzeug zusammen. Alternativ sind die ersten Formschlussmittel der Werkzeugkupplung korrespondierend zu einer Werkzeugaufnahme des Drehmomentschlüssels ausgebildet, sodass der Drehmomentschlüssel unmittelbar mit der Werkzeugkupplung zusammenwirken kann. Insbesondere durch ein System bestehend aus Werkzeugkupplung, Zugratsche und Drehmomentschlüssel treten die Vorteile, welche bereits oben in Bezug auf die Werkzeugkupplung beschrieben worden sind, besonders deutlich hervor.

In einem weiteren dritten Beispiel wird eine Zugratsche für ein Spannsystem zum Spannen eines Schweiß-Sattelstücks gegen ein Kunststoffrohr offenbart, wobei die Zugratsche einen Rahmen, der eine drehbar in dem Rahmen gelagerte und geschlitzte Gurtwelle mit einem axialen Schlitz und einem Gurt aufweist, der an einem ersten Ende mit dem Rahmen reversibel verbunden ist und dessen anderes Ende durch den Schlitz der Gurtwelle führbar ist, sodass der Gurt durch Rotation der Gurtwelle auf diese aufwickelbar ist, um eine Schlaufe des Gurtes zu verkleinern, wobei die Zugratsche einen Rastmechanismus aufweist, der Rotation der Gurtwelle in eine Drehrichtung gestattet und in die andere verhindert, wobei sich wenigstens ein Wellenende der Gurtwelle aus dem Rahmen heraus erstreckt und an dem Wellenende erste Formschlussmittel, die dazu angepasst sind, mit einem Drehmomentschlüssel zum Antreiben der Gurtwelle zusammenzuwirken, einstückig angeformt sind. Gemäß diesem Beispiel ist keine separate Werkzeugkupplung vorgesehen, die zwischen einem Drehmomentschlüssel und einer Zugratsche wirkt. Vielmehr sind die ersten Formschlussmittel einstückig an einem axialen Wellenende der Gurtwelle vorgesehen. So kann der Drehmomentschlüssel unmittelbar mit der Gurtwelle der Zugratsche zum Antreiben dieser zusammenwirken. Die ersten Formschlussmittel sind vorzugsweise entsprechend den oben beschriebenen ersten Formschlussmitteln der Werkzeugkupplung ausgebildet und weisen demnach vorzugsweise einen Außensechskant, einen Innensechskant und/oder einen Außenvierkant, der korrespondierend zu einer Werkzeugaufnahme eines Drehmomentschlüssels ausgebildet ist auf. Eine derart ausgestattete Zugratsche kann einerseits mit einem Drehmomentschlüssel angetrieben werden, andererseits durch einen vorzugsweise vorgesehenen integrierten Spannhebel betätigt werden, wie dies bei im Stand der Technik bekannten Zugratschen üblich ist. Dadurch ist ein Einsatzraum der Zugratsche vergrößert, und diese kann sowohl manuell mittels des Spannhebels betätigt werden, als auch, sofern gewünscht, durch einen Drehmomentschlüssel zum Einstellen einer bestimmten Spannkraft des Spanngurtes.

Erfindungsgemäß wird die eingangs genannte Aufgabe durch ein Verfahren zum Spannen eines Schweiß-Sattelstücks gegen ein Kunststoffrohr nach Anspruch 1 gelöst. Es soll verstanden werden, dass das Verfahren sowie die vorstehend beschriebenen bevorzugten Ausführungsformen einer Werkzeugkupplung, eines Spannsystems sowie einer Zugratsche gleiche und ähnliche Aspekte haben, wie sie vorstehend niedergelegt sind. Daher wird für die bevorzugten Ausführungsformen und konstruktiven Merkmale sowie die Vorteile einzelner Merkmale vollumfänglich auf die oben stehende Beschreibung verwiesen.

Vorzugsweise wird bei dem erfindungsgemäßen Verfahren ferner ein zweiter Gurt eines zweiten Spannsystems um das Kunststoffrohr und um das daran angeordnete Schweiß-Sattelstück angeordnet und ebenso gespannt.

Nachstehend wird die Erfindung anhand eines Ausführungsbeispiels eines erfindungsgemäßen Verfahrens unter Bezugnahme auf die beiliegenden Figuren näher beschrieben. Dabei zeigen:
- Figur 1: eine perspektivische Ansicht einer Werkzeugkupplung;
- Figur 2: eine perspektivische Ansicht einer Zugratsche mit einem Spanngurt, welche um ein Kunststoffrohr angeordnet sind;
- Figur 3: ein Spannsystem aufweisend eine Zugratsche, einen Spanngurt, eine Werkzeugkupplung sowie einen Drehmomentschlüssel, wobei Zugratsche und Spanngurt um ein Kunststoffrohr angeordnet sind; und
- Figur 4: eine Zugratsche mit einem Spanngurt, welche um ein Kunststoffrohr angeordnet sind, wobei eine Verrastung des Rastmechanismus manuell gelöst wird.

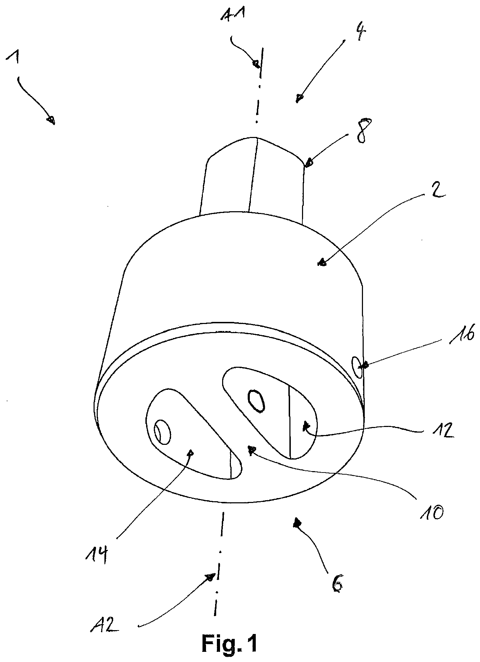

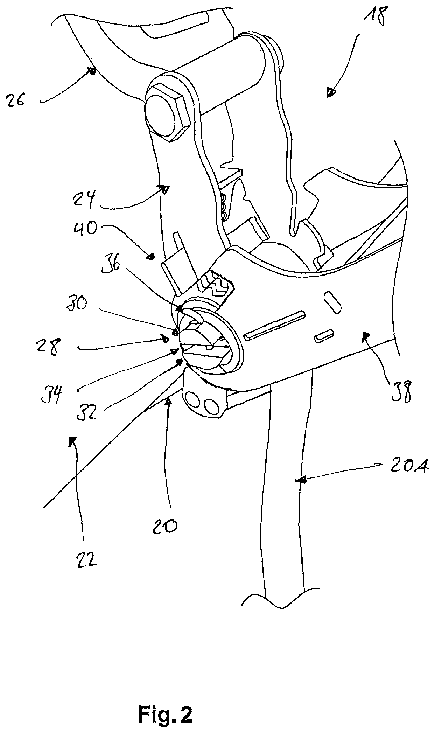

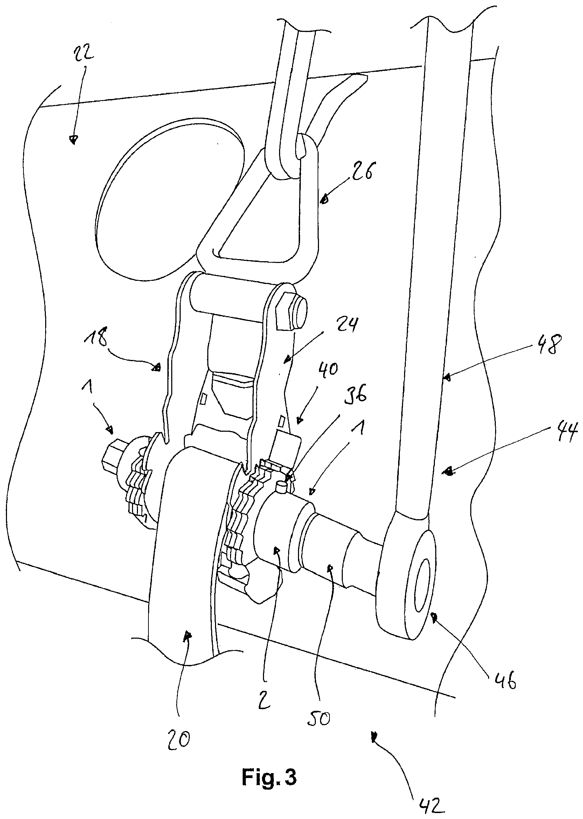

Fig. 1 zeigt in einer schematischen perspektivischen Ansicht eine Werkzeugkupplung 1 für ein Spannsystem 42 (siehe Fig. 2) zum Spannen eines Schweiß-Sattelstücks gegen ein Kunststoffrohr 22 (siehe Fig. 2 bis 4). Die Werkzeugkupplung 1 weist einen Körper 2 auf, der gemäß diesem Ausführungsbeispiel eine im Wesentlichen zylindrische Grundform hat. Der Körper hat eine Antriebsseite 4 und eine gegenüberliegende Abtriebsseite 6. An der Antriebsseite 4 sind erste Formschlussmittel 8 ausgebildet, und an der Abtriebsseite 6 sind zweite Formschlussmittel 10 ausgebildet. Die ersten Formschlussmittel 8 sind dazu angepasst, mit einem Drehmomentschlüssel (siehe Fig. 3) zum Antreiben des Körpers 2 zusammenzuwirken, und die zweiten Formschlussmittel 10 sind dazu angepasst, mit einer geschlitzten Gurtwelle (siehe Fig. 2 bis 4) einer Zugratsche eines Spannsystems zum Übertragen von Momenten formschlüssig zusammenzuwirken.

Gemäß diesem Ausführungsbeispiel sind die ersten Formschlussmittel 8 als Außensechskant ausgebildet. Genauer sind diese ersten Formschlussmittel 8 gemäß diesem Ausführungsbeispiel als 19er-Außensechskant, das heißt mit einer Schlüsselweite von 19 mm ausgebildet. In einer nicht gezeigten Alternative weisen die ersten Formschlussmittel 8 eine Außenkontur auf, die mit einer Werkzeugaufnahme eines Drehmomentschlüssels korrespondiert, derart, dass der Drehmomentschlüssel unmittelbar mit den ersten Formschlussmitteln 8 zusammenwirken kann, zum Antreiben des Körpers 2.

Die zweiten Formschlussmittel 10 der Abtriebsseite 6 sind gemäß diesem Ausführungsbeispiel als Steg 10 ausgebildet. Der Steg 10 trennt zwei Ausnehmungen 12, 14 voneinander. Die Ausnehmungen 12, 14 dienen dazu, axiale Wellenenden einer geschlitzten Gurtwelle aufzunehmen (vergleiche Fig. 2). Indem der Steg 10 die beiden Ausnehmungen 12, 14, die in den Körper 2 eingebracht sind, voneinander trennt, ist dieser nicht als Vorsprung ausgebildet. Vielmehr ist die Stirnseite der Abtriebsseite 6 im Wesentlichen flächig ausgebildet. Dies ist vorteilhaft, da an der Werkzeugkupplung 1 so weniger vorstehende Elemente vorhanden sind, wodurch die Handhabung vereinfacht sein kann.

Sowohl die ersten Formschlussmittel 8 als auch die zweiten Formschlussmittel 10 weisen jeweils eine Zentralachse A1 und A2 auf. Die beiden Zentralachsen A1, A2 sind gemäß diesem Ausführungsbeispiel deckungsgleich und bilden eine gemeinsame Zentralachse der Werkzeugkupplung 1.

Die Werkzeugkupplung 1 weist gemäß diesem Ausführungsbeispiel (Fig. 1) ferner eine Bohrung 16 auf, die sich vollständig durch den Körper 2 erstreckt. Die Bohrung 16 ist senkrecht zu den Zentralachsen A1, A2 angeordnet und durchsetzt den Körper 2 im Bereich der zweiten Formschlussmittel 10, verläuft also durch den Steg 10 sowie Wände, die die Ausnehmungen 12, 14 radial äußerlich begrenzen. Die Bohrung 16 dient der Aufnahme eines Arretierstifts (vergleiche Fig. 3). Insgesamt ist die Werkzeugkupplung 1 gemäß diesem Ausführungsbeispiel einstückig aus einem Metallmaterial gebildet.

Während mit Bezug auf Fig. 1 die wesentlichen strukturellen Merkmale der Werkzeugkupplung 1 beschrieben worden sind, wird die Verwendung der Werkzeugkupplung 1 mit Bezug auf die Fig. 2 bis 4 näher erläutert werden.

Fig. 2 zeigt eine Zugratsche 18 mit einem Gurt 20. Sowohl Zugratsche 18 als auch Gurt 20 sind wie im Stand der Technik bekannt ausgebildet, und entsprechende Zugratschen sind beispielsweise von der Fa. SpanSet Ltd. erhältlich. Die Zugratsche 18 und der Gurt 20 sind, wie in Fig. 2 gezeigt, um ein Kunststoffrohr 22 angeordnet, um ein nicht gezeigtes Schweiß-Sattelstück gegen das Kunststoffrohr 22 zu pressen. Die Zugratsche 18 weist einen Rahmen 24 auf, an dem an einem ersten Ende eine Halterung 26 vorgesehen ist, die fest mit dem Gurt 20 verbunden ist (in Fig. 2 nicht gezeigt). Die Zugratsche 18 weist ferner eine Gurtwelle 28 auf, die durch den Rahmen 24 verläuft und sich an axialen Enden aus diesem heraus erstreckt. Die Gurtwelle ist geschlitzt und weist zwei axiale Wellenenden 30, 32 auf, die zwischen sich den axialen Schlitz 34 einschließen. Des Weiteren ist ein Arretierstift 36 vorgesehen, der die beiden Wellenenden 30, 32 radial durchsetzt und so ein Herausgehen der Gurtwelle 28 aus dem Rahmen 24 verhindert.

Die Zugratsche 18 weist ferner einen werksseitig vorgesehenen Spannhebel 38 auf, der mit der Gurtwelle 28 zusammenwirkt, um diese rotierend anzutreiben, sowie einen Rastmechanismus 40. Der Rastmechanismus 40 dient dazu, Rotation in die eine Richtung der Gurtwelle zuzulassen (in Fig. 2 die Richtung gegen den Uhrzeigersinn; Hebel 38 wird nach oben bewegt) und Rotation in die andere Richtung (in Fig. 2 mit dem Uhrzeigersinn) zu verhindern. Dadurch ist es möglich, eine gespannte Position des Gurtes 20 zu fixieren. Der Gurt 20 wird beim Spannen auf die geschlitzte Gurtwelle 28 aufgerollt, und ein freies Gurtende 20a hängt dabei von der Zugratsche 18 herab.

Wie insbesondere im Vergleich zu den Fig. 1 und 2 ersichtlich ist, ist der Steg derart ausgebildet, dass er in den Schlitz 34 zwischen den beiden Wellenenden 30, 32 eingreifen kann. Die Ausnehmungen 12, 14 sind entsprechend gebildet, um die entsprechenden Wellenenden 30, 32 aufzunehmen. Auf diese Art und Weise wird die Werkzeugkupplung 1 auf die geschlitzte Gurtwelle 28 aufgesteckt. Bei diesem Ausführungsbeispiel (siehe Fig. 1 und 2) ist dazu vorzugsweise vorher der Arretierstift 36 von der geschlitzten Gurtwelle 28 zu entfernen, anschließend die Werkzeugkupplung 1 aufzustecken, sodass beispielsweise das Wellenende 30 in die Ausnehmung 12 greift und das Wellenende 32 in die Ausnehmung 14 greift, wobei der Steg 10 in den Schlitz 34 eingreift, und anschließend wird der Arretierstift 36 durch die Bohrung 16 und die entsprechende Bohrung der Gurtwelle 28 geführt, sodass eine formschlüssige Fixierung der Werkzeugkupplung 1 an der Gurtwelle 28 erreicht ist und diese sich nicht selbsttätig von der Zugratsche 18 löst. Hierdurch ist eine Anordnung erreicht wie in Fig. 3 gezeigt.

Fig. 3 zeigt das Spannsystem 42 zum Spannen eine Schweiß-Sattelstücks gegen ein Kunststoffrohr 22 mit einer Werkzeugkupplung 1 und einer Zugratsche 18. Gemäß diesem Ausführungsbeispiel ist ferner ein Drehmomentschlüssel 44 vorgesehen. Der Drehmomentschlüssel 44 ist gemäß Fig. 3 in Eingriff mit der Werkzeugkupplung 1 dargestellt wie nachfolgend erläutert. Die Zugratsche 18 gemäß Fig. 3 ist ohne den werksseitig vorgesehenen Spannhebel 38 dargestellt.

Wenn die Gurtwelle 28 mit Hilfe der Werkzeugkupplung mit einem Drehmomentschlüssel 44 angetrieben wird, ist kein Spannhebel 38, wie dieser üblicherweise bei herkömmlichen Zugratschen 18 vorgesehen ist, notwendig.

Wie aus Fig. 3 ersichtlich, sind gemäß diesem Ausführungsbeispiel zwei Werkzeugkupplungen 1 an beiden axialen Enden der geschlitzten Gurtwelle 28 (in Fig. 3 ist diese nicht zu sehen, da innenliegend) reversibel lösbar angeordnet. Bei der in Bezug auf Fig. 3 rechten Werkzeugkupplung 1 ist ferner zu erkennen, dass diese mittels des Arretierstifts 36 formschlüssig mit der Gurtwelle 28 verbunden ist.

Der Drehmomentschlüssel 44 weist einen Schlüsselkopf 46 und einen Schaft 48 auf. An dem Schlüsselkopf 46 ist ferner gemäß diesem Ausführungsbeispiel ein Werkzeug 50 lösbar befestigt, welches mit den ersten Formschlussmitteln 8 der Werkzeugkupplung 1 zusammenwirkt. Dadurch ist es möglich, die geschlitzte Gurtwelle 28 mit dem Drehmomentschlüssel rotierend anzutreiben, um so den Gurt 20 zu spannen.

In einer nicht dargestellten Alternative sind die ersten Formschlussmittel 8 unmittelbar an den Wellenenden 30, 32 angeformt, sodass der Drehmomentschlüssel 44 unmittelbar an der Gurtwelle 28 angreifen kann.

Zum Spannen des Gurts 20 ist nun wie folgt vorzugehen. Zunächst ist auf die Wellenenden 30, 32 der geschlitzten Gurtwelle 28 die Werkzeugkupplung 1 aufzustecken und eventuell mit dem Arretierstift 36 zu fixieren. Anschließend ist das Drehmoment zu bestimmen, welches notwendig ist, um die gewünschte Anpresskraft zum Anpressen des Schweiß-Sattelstücks an dem Rohr 22 zu erzielen. Dieses gewünschte Moment wird an dem Drehmomentschlüssel 44 mittels einer dort vorgesehenen Einstelleinrichtung eingestellt. Anschließend wird ein zu dem Formschlussmittel 8 der Werkzeugkupplung 1 passendes Werkzeug 50 auf den Drehmomentschlüssel 44 beziehungsweise auf den Kopf 46 aufgesteckt und dieses Werkzeug 50 in Eingriff mit der Werkzeugkupplung 1 gebracht. Anschließend wird der Drehmomentschlüssel 44 manuell betätigt und so der Gurt 20 gespannt, bis das an dem Drehmomentschlüssel 44 eingestellte Moment erreicht wird. Durch eine taktile und/oder auditive und/oder visuelle Rückmeldung des Drehmomentschlüssels 44 beim Erreichen des eingestellten Moments erfährt der Bediener, dass das entsprechende Moment erreicht worden ist. Der Spannvorgang ist sodann abgeschlossen, und der Drehmomentschlüssel 44 kann entfernt werden. Zu diesem Zeitpunkt ist es auch möglich, die Werkzeugkupplung 1 von der Zugratsche 18 zu entfernen und diese beispielsweise dazu zu verwenden, eine weitere Zugratsche mit einem entsprechenden Gurt zu betätigen.

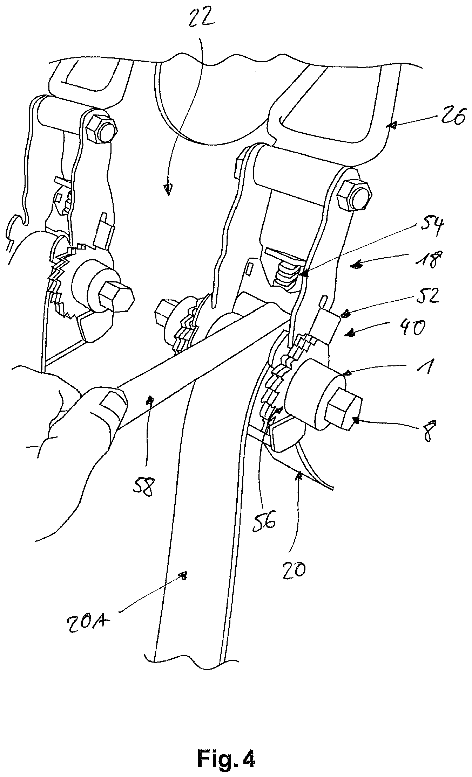

Nach Abschluss des Schweißvorgangs ist die Zugratsche dann wiederum zu lösen. Dies ist in Fig. 4 schematisch dargestellt. Die dortige Zugratsche 18 ist dieselbe wie in Fig. 3. Die Werkzeugkupplung 1 befindet sich noch auf der geschlitzten Gurtwelle 28. Der Drehmomentschlüssel 44 samt Werkzeug 50 ist entfernt. Der Rastmechanismus 40 weist eine Sperrklinke 52 auf, die mittels einer Feder 54 in einer Arretierstellung belastet ist. In dieser Arretierstellung greift die Sperrklinke 52 in ein gezahntes Rad 56 des Rastmechanismus 40 ein und verhindert so eine Rotation entgegen der Spannrichtung der Gurtwelle 28. Bei handelsüblichen Zugratschen 18 wird der Rastmechanismus 40 durch entsprechende Betätigung des Spannhebels 38 (siehe Fig. 2) aktiviert. Da jedoch gemäß diesem Ausführungsbeispiel (siehe Fig. 3 und 4 insbesondere) der Spannhebel 38 entfernt ist, da das Spannen mittels des Drehmomentschlüssels 44 erfolgt, wird der Rastmechanismus 40 hier manuell gelöst. Dazu greift ein Bediener mit einer Stange 58 in einen Zwischenraum in die Zugratsche 18 ein und belastet die Sperrklinke 52 entgegen der durch die Feder 54 aufgebrachten Federkraft und löst diese so von dem gezahnten Rad 56, sodass sich dieses samt Gurtwelle 28 entgegen der Spannrichtung der Gurtwelle 28 drehen kann, sodass der Gurt 20 entlastet wird. Nach vollständiger Abwicklung des Gurts 20 von der Gurtwelle 28 kann dieser wiederum aus dem Schlitz 34 der Gurtwelle 28 herausgezogen werden und so das gesamte Spannsystem von dem Kunststoffrohr 22 entfernt werden.

## Patentansprüche

1. Verfahren zum Spannen eines Schweiß-Sattelstücks gegen ein Kunststoffrohr (22) unter Verwendung eines Spannsystems (42) mit einer Zugratsche (18), wobei die Zugratsche (18) einen Rahmen (24), eine drehbar in dem Rahmen (24) gelagerte und geschlitzte Gurtwelle (28) mit einem axialen Schlitz (34) und einen Gurt (20) aufweist, der an einem ersten Ende mit dem Rahmen (24) reversibel verbunden ist und dessen anderes Ende (20A) durch den Schlitz (34) der Gurtwelle (28) führbar ist, so dass der Gurt (20) durch Rotation der Gurtwelle (28) auf diese aufwickelbar ist, um eine Schlaufe des Gurts (20) zu verkleinern, wobei die Zugratsche (18) einen Rastmechanismus (40) aufweist, der eine Rotation der Gurtwelle (28) in eine Drehrichtung gestattet und in die andere verhindert, wobei sich wenigstens ein geschlitztes Wellenende (30, 32) der Gurtwelle (28) aus dem Rahmen (24) heraus erstreckt,
wobei das Verfahren folgenden Schritt umfasst:
- Anordnen eines Gurtes (20) des Spannsystems (42) um ein Kunststoffrohr (22) und ein daran angeordnetes Schweiß-Sattelstück;
**dadurch gekennzeichnet, dass** das Spannsystem (42) ferner eine Werkzeugkupplung (1) mit einem Körper (2) aufweist, der eine Antriebsseite (4) und eine gegenüberliegende Abtriebsseite (6) hat, wobei an der Antriebsseite (4) erste Formschlussmittel (8) und an der Abtriebsseite (6) zweite Formschlussmittel (10) ausgebildet sind, wobei die Werkzeugkupplung (1) mittels der zweiten Formschlussmittel (10) auf dem sich aus dem Rahmen (24) heraus erstreckenden geschlitzten Wellenende (30, 32) reversibel lösbar anordenbar ist,
wobei die ersten Formschlussmittel (8) dazu angepasst sind, mit einem Drehmomentschlüssel (44) zum Antreiben des Körpers (2) zusammenzuwirken, und die zweiten Formschlussmittel (10) dazu angepasst sind, mit der geschlitzten Gurtwelle (28) zum Übertragen von Momenten formschlüssig zusammenzuwirken, und dass das Verfahren folgende Schritte umfasst:
- Spannen des Gurtes (20) mittels der Zugratsche (18) und einem Drehmomentschlüssel (44), wobei der Drehmomentschlüssel (44) an der Gurtwelle (28) der Zugratsche (18) angreift,
- Einstellen eines vorbestimmten Zurrmoments an dem Drehmomentschlüssel (44), welches einer vorbestimmten gewünschten Spannkraft des Gurtes (20) entspricht.

2. Verfahren nach Anspruch 1, wobei die ersten Formschlussmittel (8) eine erste Zentralachse (A1) und die zweiten Formschlussmittel (10) eine zweite Zentralachse (A2) aufweisen und die Zentralenachsen (A1, A2) koaxial ausgerichtet sind.

3. Verfahren nach Anspruch 1 oder 2, wobei die ersten Formschlussmittel (8) einen Außensechskant aufweisen.

4. Verfahren nach einem der vorstehenden Ansprüche, wobei die ersten Formschlussmittel (8) einen Innensechskant aufweisen.

5. Verfahren nach einem der vorstehenden Ansprüche, wobei die zweiten Formschlussmittel einen Steg (10) zum Eingreifen in einen Schlitz (34) der geschlitzten Gurtwelle (28) aufweisen.

6. Verfahren nach Anspruch 5, wobei der Steg (10) eine diesen definierende Zentralebene aufweist, und eine Zentralachse (A2) der zweiten Formschlussmittel im Wesentlichen in der Zentralebene liegt.

7. Verfahren nach einem der vorstehenden Ansprüche, wobei die zweiten Formschlussmittel (10) zwei Ausnehmungen (12, 14) zur Aufnahme von zwei axialen Endabschnitten (30, 32) der Gurtwelle (28) aufweisen.

8. Verfahren nach Anspruch 5 und 7, wobei die beiden Ausnehmungen (12, 14) durch den Steg (10) voneinander getrennt sind.

9. Verfahren nach einem der vorstehenden Ansprüche, wobei die Werkzeugkupplung (1) eine Bohrung (16) zur Aufnahme eines Arretierstifts (36) zum Arretieren der Werkzeugkupplung (1) gegen eine Gurtwelle (28) aufweist, wobei die Bohrung sich wenigstens teilweise radial zu einer Zentralachse (A2) der zweiten Formschlussmittel (10) durch den Körper (2) erstreckt, vorzugsweise im Bereich der zweiten Formschlussmittel (10).

10. Verfahren nach einem der vorstehenden Ansprüche, wobei die Werkzeugkupplung (1) einstückig ausgebildet ist.

11. Verfahren nach Anspruch 9, wobei die Zugratsche (18) einen Arretierstift (36) aufweist, der radial durch die Bohrung (16) der Werkzeugkupplung (1) und eine Bohrung in dem geschlitzten Wellenende (30, 32) der Gurtwelle (28) verläuft, sodass die Werkzeugkupplung (1) mittels des Arretierstifts (36) auf der Gurtwelle (28) arretiert ist.

12. Verfahren nach Anspruch 11, ferner aufweisend einen Drehmomentschlüssel (44), wobei die ersten Formschlussmittel (8) der Werkzeugkupplung (1) mit dem Drehmomentschlüssel (44) zusammenwirken.

## Claims

1. Method for tightening a welding saddle piece against a plastics pipe (22) using a tightening system (42) with a pull down ratchet (18), the pull down ratchet (18) having a frame (24), a slotted belt shaft (28) mounted rotatably in the frame (24) and having an axial slot (34), and a belt (20) which is reversibly connected at a first end with the frame (24) and the other end (20A) of which is guidable through the slot (34) in the belt shaft (28), such that the belt (20) can be wound onto the belt shaft (28) by rotation thereof, in order to reduce the size of a loop of the belt (20), the pull down ratchet (18) having a catch mechanism (40) which enables rotation of the belt shaft (28) in one direction of rotation and prevents it in the other, at least one slotted shaft end (30, 32) of the belt shaft (28) extending out of the frame (24),
the method comprising the following step:
- arranging a belt (20) of the tightening system (42) around a plastics pipe (22) and a welding saddle piece arranged thereon;
**characterized in that** the tightening system (42) additionally has a tool coupling (1) with a body (2) which has a drive side (4) and an opposing output side (6), wherein first form-fitting means (8) are formed on the drive side (4) and second form-fitting means (10) are formed on the output side (6), wherein the tool coupling (1) may be arranged in reversibly detachable manner on the slotted shaft end (30, 32) extending out of the frame (24) by means of the second form-fitting means (10),
wherein the first form-fitting means (8) are adapted to cooperate with a torque wrench (44) for driving the body (2), and the second form-fitting means (10) are adapted to cooperate in form-fitting manner with the slotted belt shaft (28) to transfer moments, and **in that** the method comprises the following steps:
- tightening the belt (20) by means of the pull down ratchet (18) and a torque wrench (44), wherein the torque wrench (44) acts on the belt shaft (28) of the pull down ratchet (18),
- establishing a predetermined pulling moment at the torque wrench (44), which corresponds to a predetermined desired tightening force for the belt (20).

2. Method according to claim 1, wherein the first form-fitting means (8) have a first central axis (A1) and the second form-fitting means (10) have a second central axis (A2) and the central axes (A1, A2) are coaxially oriented.

3. Method according to claim 1 or 2, wherein the first form-fitting means (8) are externally hexagonal.

4. Method according to one of the preceding claims, wherein the first form-fitting means (8) are internally hexagonal.

5. Method according to one of the preceding claims, wherein the second form-fitting means have a web (10) for engaging in a slot (34) of the slotted belt shaft (28).

6. Method according to claim 5, wherein the web (10) has a central plane defining it, and a central axis (A2) of the second form-fitting means lies substantially in the central plane.

7. Method according to one of the preceding claims, wherein the second form-fitting means (10) have two recesses (12, 14) for accommodating two axial end portions (30, 32) of the belt shaft (28).

8. Method according to claims 5 and 7, wherein the two recesses (12, 14) are separated from one another by the web (10).

9. Method according to one of the preceding claims, wherein the tool coupling (1) has a hole (16) for accommodating a locking pin (36) for locking the tool coupling (1) against a belt shaft (28), wherein the hole extends at least in part radially relative to a central axis (A2) of the second form-fitting means (10) and through the body (2), preferably in the region of the second form-fitting means (10).

10. Method according to one of the preceding claims, wherein the tool coupling (1) is of one-piece configuration.

11. Method according to claim 9, wherein the pull down ratchet (18) has a locking pin (36), which runs radially through the hole (16) in the tool coupling (1) and a hole in the slotted shaft end (30, 32) of the belt shaft (28), such that the tool coupling (1) is locked on the belt shaft (28) by means of the locking pin (36).

12. Method according to claim 11, additionally having a torque wrench (44), wherein the first form-fitting means (8) of the tool coupling (1) cooperate with the torque wrench (44).

## Revendications

1. Procédé pour serrer une pièce d'étrier à souder contre un tube en plastique (22) à l'aide d'un système de serrage (42) pourvu d'un tendeur à cliquet (18), le tendeur à cliquet (18) présentant un cadre (24), un axe à sangle (28) logé de manière rotative dans le cadre (24) et fendu, présentant une fente axiale (34), et une sangle (20) qui est reliée de manière réversible à une première extrémité du cadre (24) et dont l'autre extrémité (20A) peut être guidée à travers la fente (34) de l'axe à sangle (28) de manière telle que la sangle (20) peut être enroulée sur celui-ci par rotation de l'axe à sangle (28) pour réduire une boucle de la sangle (20), le tendeur à cliquet (18) présentant un mécanisme d'encliquetage (40) qui permet une rotation de l'axe à sangle (28) dans un sens de rotation et qui l'empêche dans l'autre sens, au moins une extrémité d'axe (30, 32) fendue de l'axe à sangle (28) s'étendant hors du cadre (24),
le procédé comprenant les étapes suivantes :
- agencement d'une sangle (20) du système de serrage (42) autour d'un tube en plastique (22) et d'une pièce d'étrier à souder agencée sur celui-ci ;
**caractérisé en ce que** le système de serrage (42) présente en outre un accouplement d'outil (1) pourvu d'un corps (2) qui possède un côté entraînement (4) et un côté sortie (6) opposé, des premiers moyen à complémentarité de forme (8) étant conçus côté entraînement (4) et des deuxième moyens à complémentarité de forme (10) étant conçus côté sortie (6), l'accouplement d'outil (1) pouvant être agencé de manière réversiblement amovible au moyen des deuxièmes moyens à complémentarité de forme (10) sur l'extrémité d'axe (30, 32) fendue s'étendant hors du cadre (24),
les premiers moyens à complémentarité de forme (8) étant conçus pour interagir avec une clé dynamométrique (44) en vue d'entraîner le corps (2) et les deuxièmes moyens à complémentarité de forme (10) étant conçus pour interagir par complémentarité de forme avec l'axe à sangle (28) fendu en vue de transmettre des couples et **en ce que** le procédé comprend les étapes suivantes :
- serrage de la sangle (20) au moyen du tendeur à cliquet (18) et d'une clé dynamométrique (44), la clé dynamométrique (44) venant en prise au niveau de l'axe à sangle (28) du tendeur à cliquet (18),
- réglage d'un couple de serrage prédéfini au niveau de la clé dynamométrique (44) qui correspond à une force de serrage souhaitée prédéfinie de la sangle (20).

2. Procédé selon la revendication 1, les premiers moyens à complémentarité de forme (8) présentant un premier axe central (A1) et les deuxièmes moyens à complémentarité de forme (10) présentant un deuxième axe central (A2) et les axes centraux (A1, A2) étant orientés de manière coaxiale.

3. Procédé selon la revendication 1 ou 2, les premiers moyens à complémentarité de forme (8) présentant un embout à tête hexagonale mâle.

4. Procédé selon l'une quelconque des revendications précédentes, les premiers moyens à complémentarité de forme (8) présentant un embout à tête hexagonale femelle.

5. Procédé selon l'une quelconque des revendications précédentes, les deuxièmes moyens à complémentarité de forme présentant une âme (10) pour s'insérer dans une fente (34) de l'axe à sangle (28) fendu.

6. Procédé selon la revendication 5, l'âme (10) présentant un plan central qui la définit et un axe central (A2) des deuxièmes moyens à complémentarité de forme se trouvant sensiblement dans le plan central.

7. Procédé selon l'une quelconque des revendications précédentes, les deuxièmes moyens à complémentarité de forme (10) présentant deux évidements (12, 14) pour recevoir deux sections d'extrémité axiales (30, 32) de l'axe à sangle (28).

8. Procédé selon la revendication 5 et 7, les deux évidements (12, 14) étant séparés l'un de l'autre par l'âme (10).

9. Procédé selon l'une quelconque des revendications précédentes, l'accouplement d'outil (1) présentant un trou (16) pour recevoir une cheville de blocage (36) pour bloquer l'accouplement d'outil (1) contre un axe à sangle (28), le trou s'étendant au moins partiellement de manière radiale par rapport à un axe central (A2) des deuxièmes moyens à complémentarité de forme (10) à travers le corps (2), de préférence dans la zone des deuxièmes moyens à complémentarité de forme (10).

10. Procédé selon l'une quelconque des revendications précédentes, l'accouplement d'outil (1) étant conçu en une seule pièce.

11. Procédé selon la revendication 9, le tendeur à cliquet (18) présentant une cheville de blocage (36) qui s'étend radialement à travers le trou (16) de l'accouplement d'outil (1) et un trou dans l'extrémité d'axe (30, 32) fendue de l'axe à sangle (28) de telle sorte que l'accouplement d'outil (1) est bloqué au moyen de la cheville de blocage (36) sur l'axe à sangle (28).

12. Procédé selon la revendication 11, présentant en outre une clé dynamométrique (44), les premiers moyens à complémentarité de forme (8) de l'accouplement d'outil (1) interagissant avec la clé dynamométrique (44).
